# EUROPÄISCHE PATENTSCHRIFT

(11) **EP 2 700 442 B1**
(45) Veröffentlichungstag und Bekanntmachung des Hinweises auf die Patenterteilung: **10.06.2015**
(21) Anmeldenummer: 13004054.6
(22) Anmeldetag: 14.08.2013
(51) Int. Cl.: B01F 3/04, B01F 5/04, B01F 5/06, F01N 3/20, F01N 3/28

(54) **Abgasanlage mit Misch- und/oder Verdampfungseinrichtung**
Exhaust system with mixing and/or vaporisation device
Installation de gaz d'échappement avec dispositif de mélange et/ou d'évaporation

(30) Priorität: 21.08.2012 DE 102012016423
(43) Veröffentlichungstag der Anmeldung: 26.02.2014
(73) Patentinhaber: Eberspächer Exhaust Technology GmbH & Co. KG, 66539 Neunkirchen (DE)
(72) Erfinder: Calvo, Silvia, DE-73730 Esslingen (DE)
(74) Vertreter: Diehl & Partner GbR

(56) Entgegenhaltungen:
- EP-A1- 0 894 523
- WO-A1-90/00929
- US-A1- 2010 132 345

## Beschreibung

Die vorliegende Erfindung betrifft eine Misch- und/oder Verdampfungseinrichtung für eine Abgasanlage einer Brennkraftmaschine, insbesondere eines Kraftfahrzeugs. Die Erfindung betrifft außerdem eine mit einer derartigen Einrichtung ausgestattete Abgasanlage.

Üblicherweise ist eine Abgasanlage einer Brennkraftmaschine mit Einrichtungen zum Reinigen bzw. Nachbehandeln der von der Brennkraftmaschine weggeführten Abgase ausgestattet. Dabei kann es erforderlich sein, ein flüssiges Edukt in den Abgasstrom einzubringen, darin zu verdampfen und mit dem Abgas zu vermischen. Beispielsweise kann es erforderlich sein, stromauf eines Oxidationskatalysators einen Kraftstoff dem Abgas zuzumischen, um durch eine exotherme Umsetzung des Kraftstoffs im Oxidationskatalysator eine Aufheizung des Abgasstroms zu bewirken. Der aufgeheizte Abgasstrom kann dann stromab des Oxidationskatalysators dazu genutzt werden, eine weitere Abgasnachbehandlungseinrichtung auf Betriebstemperatur bzw. auf Regenerationstemperatur aufzuheizen, beispielsweise einen anderen Katalysator oder einen Partikelfilter. Ferner sind SCR-Systeme bekannt, die mit selektiver katalytischer Reaktion arbeiten und mit einem SCR-Katalysator ausgestattet sind, der NOₓ aus dem Abgasstrom aufnimmt.

Um eine möglichst platzsparende Ausgestaltung der Abgasanlage zu ermöglichen, können der Oxidationskatalysator und der SCR-Katalysator parallel nebeneinander angeordnet sein. Das auslassseitige Ende des Oxidationskatalysators und das einlassseitige Ende des SCR-Katalysators sind in diesem Fall so über einen als Trichter bzw. Mischkammer bezeichneten Teil der Abgasanlage miteinander verbunden, dass die Abgasströmung nach dem Oxidationskatalysator und vor dem SCR-Katalysator jeweils um 90° umgelenkt wird.

Stromauf des SCR-Katalysators wird dem Abgasstrom im Bereich der Mischkammer als Edukt ein geeignetes Reduktionsmittel zugeführt, beispielsweise Ammoniak bzw. Harnstoff, vorzugsweise eine wässrige Harnstofflösung. Im SCR-Katalysator bewirkt das Ammoniak dann eine Umwandlung der eingelagerten Stickoxide in Stickstoff und Wasser.

Für alle in flüssiger Form dem Abgasstrom zugeführten Edukte gilt, dass der gewünschte Effekt nur dann zufriedenstellend erreichbar ist, wenn zwischen der Einleitungsstelle des flüssigen Edukts und einem Verbrauchsort des Edukts eine hinreichende Verdampfung des Edukts sowie eine hinreichende Durchmischung des gasförmigen Edukts mit dem Abgasstrom erfolgen kann. Zu diesem Zweck kommen die eingangs genannten Misch- und/oder Verdampfungseinrichtungen zum Einsatz, die im Strömungspfad des Abgases zwischen der Einleitungsstelle des Edukts und der Verbrauchsstelle des Edukts angeordnet werden. Bei der oben beschriebenen Ausführung der Abgasanlage steht für die Verdampfung und Durchmischung des Reduktionsmittels jedoch nur die relativ kurze Mischkammer zwischen dem Oxidationskatalysator und dem SCR-Katalysator zur Verfügung, was ein Vollständiges Verdampfen und Durchmischen des Reduktionsmittels vor dem Eintreffen in dem SCR-Katalysator erschwert.

Zudem erfolgt die Zugabe des Reduktionsmittels in der Regel über eine Düse, die das Reduktionsmittel als einen sich aufweitenden, kegelförmigen Strahl in den Abgasstrom einbringt. Ein Teil des Reduktionsmittels bewegt sich also nicht genau in Strömungsrichtung in dem Abgasstrom, sondern mit einer Richtungskomponente in Richtung der Wand der Abgasanlage. Da die Mischkammer einen relativ flachen Strömungsquerschnitt aufweist kann dies dazu führen, dass Tröpfchen an der Wand der Mischkammer auftreffen und einen Wandfilm ausbilden, bevor das Reduktionsmittel verdampft ist. Aus einem solchen Wandfilm lässt sich das Reduktionsmittel nur schwer wieder in den Abgasstrom zurückführen und verdampfen bzw. durchmischen. Die Ausbildung eines Wandfilms wird zusätzlich noch dadurch begünstigt, dass das Reduktionsmittel unmittelbar hinter dem Oxidationskatalysator in den Abgasstrom eingebracht wird, um einen möglichst langen Strömungsweg zur Verdampfung und Durchmischung des Reduktionsmittels zur Verfügung zu haben. In diesem Bereich wird die Abgasströmung jedoch wie oben erwähnt um 90° umgelenkt, wodurch zusätzlich Zentrifugalkräfte auftreten können, welche die Tröpfen an die Wand der Mischkammer schleudern können.

Die vorliegende Erfindung beschäftigt sich mit dem Problem, für eine Einrichtung der eingangs genannten Art bzw. bzw. eine damit ausgestattete Abgasanlage eine verbesserte oder zumindest eine andere Ausführungsform anzugeben, die sich durch einen einfacheren und somit preiswerteren Aufbau auszeichnet. Zudem soll weiterhin bei einem möglichst geringen Abgasgegendruck eine verbesserte Vermischung des Edukts mit dem Abgas sowie ein Verhindern der Ausbildung eines Wandfilms erzielt werden.

Dieses Problem wird bei der vorliegenden Erfindung insbesondere durch die Gegenstände der unabhängigen Ansprüche gelöst. Vorteilhafte Ausführungsformen sind Gegenstand der abhängigen Ansprüche.

Dokument WO-A-90/00929 offenbart eine Mischeinrichtung gemäß dem Oberbegriff des Anspruchs 1.

Die Erfindung beruht auf dem allgemeinen Gedanken, die Misch- und/oder Verdampfungseinrichtung mit einem Tragkörper auszustatten, der einen quer zur Axialrichtung der Einrichtung verlaufenden, flachen, durchströmbaren Querschnitt der Einrichtung in der Umfangsrichtung umschließt. Der Tragkörper definiert somit keinen kreisförmigen Querschnitt, sondern einen länglichen bzw. flachen Querschnitt, derart, dass der Tragkörper zwei einander gegenüberliegende lange Seitenwände und zwei einander gegenüberliegende kurze Seitenwände aufweist, wobei die kurzen Seitenwände jeweils die beiden langen Seitenwände miteinander verbinden. Durch die erfindungsgemäß vorgeschlagene Ausgestaltung des Tragkörpers mit einem flachen Querschnitt ist es möglich, zumindest an einem axialen Ende einer langen Seitenwand mehrere Leitschaufeln nebeneinander in einer Reihe anzuordnen, die in Richtung zur anderen langen Seitenwand abstehen und die gegenüber der Axialrichtung unter einem Anstellwinkel angestellt sind. Durch diese Bauweise erstrecken sich die Leitschaufeln quer zur Axialrichtung und sind außerdem sowohl quer zur Axialrichtung als auch quer zu ihrer Längsrichtung nebeneinander angeordnet. Die Axialrichtung der Einrichtung verläuft dabei parallel zu einer Hauptströmungsrichtung des Abgases durch die Einrichtung. Diese Hauptströmungsrichtung berücksichtigt dabei Strömungsablenkungen, Querströmungen, Rückströmungen, Verwirbelungen und dergleichen innerhalb des durchströmbaren Querschnitts nicht. An einem axialen Ende der jeweiligen langen Seitenwand wird somit eine Reihe nebeneinander angeordneter, insbesondere parallel zueinander verlaufender Leitschaufeln bereitgestellt, die jeweils eine Strömungsablenkung in Richtung einer kurzen Seitenwand bewirken. Die langen Seitenwände erstrecken sich dabei unterschiedlich weit in Axialrichtung, wodurch sich eine abgestufte Anordnung der axialen Enden der langen Seitenwände ergibt.

Auf diese Weise kann die Misch- und/oder Verdampfungseinrichtung sehr gut auf in der Mischkammer herrschende Strömungsverläufe, wie sie beispielsweise durch die Umlenkung um 90° auftreten können, angepasst werden. Weiterhin können mit dieser Anordnung unterschiedliche Arten der Eindüsung von Reduktionsmittel zu berücksichtigt werden.

Entsprechend einer besonders vorteilhaften Ausführungsform ist das anströmseitige axiale Ende der zweiten langen Seitenwand gegenüber dem anströmseitigen axialen Ende der ersten langen Seitenwand in Axialrichtung entgegen der Strömungsrichtung versetzt, d. h. stromabwärts des abseitigen axialen Endes der ersten langen Seitenwand angeordnet.

Die unterschiedliche Länge der langen Seitenwände in Axialrichtung auf der Anströmseite, d. h. der dem Oxidationskatalysator zugewandten Seite, bewirkt einen gestuften Aufbau der Misch- und/oder Verdampfungseinrichtung auf dieser Seite. Dadurch kann das anströmseitige Ende der Misch- und/oder Verdampfungseinrichtung so zu dem Oxidationskatalysator positioniert werden, dass ein Teil der Misch- und/oder Verdampfungseinrichtung zwar vor der Austrittsfläche am Stromabwärtigen Ende des Oxidationskatalysators angeordnet ist, von diesem jedoch in Längsrichtung des Oxidationskatalysators beabstandet ist. Somit kann die Anströmseite der Misch- und/oder Verdampfungseinrichtung näher an der Einrichtung zum Einbringung des Reduktionsmittels angeordnet werden, ohne dabei den Strömungsquerschnitt am austrittsseitigen Ende des Oxidationskatalysators zu verringern.

Entsprechend einer weiteren vorteilhaften Ausführungsform ist das abströmseitige axiale Ende der zweiten langen Seitenwand gegenüber dem abströmseitigen axialen Ende der ersten langen Seitenwand in Axialrichtung in Strömungsrichtung versetzt.

Je nach Art der Einbringung des Reduktionsmittels und der Strömungsverhältnisse kann eine Häufung des Reduktionsmittels an einer von dem Oxidationskatalysator und dem SCR-Katalysator abgewandten, also einer äußeren Wand der Mischkammer, oder einer dem Oxidationskatalysator und dem SCR-Katalysator zugewandten, also einer inneren Wand der Mischkammer, auftreten. Durch die Verlagerung des abströmseitigen axialen Endes der zweiten langen Seitenwand in Strömungsrichtung kann der Strömungsverlauf an einer weiter stromabwärts gelegenen Stelle an der außen gelegenen Wand der Mischkammer beeinflusst werden, wodurch sich an der außen gelegenen Wand in der Nähe des SCR-Katalysators nochmals eine Durchmischung des Reduktionsmittels mit dem Abgasstrom erzielen lässt.

Gemäß einer anderen vorteilhaften Ausführungsform ist das abströmseitige axiale Ende der ersten langen Seitenwand gegenüber dem abströmseitigen axialen Ende der zweiten langen Seitenwand in Axialrichtung in Strömungsrichtung versetzt, d. h. stromabwärts des abseitigen axialen Endes der ersten langen Seitenwand angeordnet.

Durch die Verlagerung des abströmseitigen axialen Endes der ersten langen Seitenwand in Strömungsrichtung kann der Strömungsverlauf an einer weiter stromabwärts gelegenen Stelle an der innen gelegenen Wand der Mischkammer beeinflusst werden. Dadurch lässt sich an der innen gelegenen Wand in der Nähe des SCR-Katalysators nochmals eine Durchmischung des Reduktionsmittels mit dem Abgasstrom erzielen.

Bei einer weiteren vorteilhaften Ausführungsform sind an der ersten und/oder zweiten langen Seitenwand an einem anströmseitigen axialen Ende mehrere Leitschaufeln angeordnet, die in Richtung zur jeweils gegenüberliegenden langen Seitenwand abstehen und gegenüber der Axialrichtung angestellt sind.

Bei einem wie oben beschriebenen gestuften Aufbau der Misch- und/oder Verdampfungseinrichtung an der Anströmseite kann diese wie beschrieben teilweise vor der Austrittsöffnung des Oxidationskatalysators angeordnet werden, ohne den Strömungsquerschnitt an der Austrittsseite des Oxidationskatalysators zu verengen. Bei anströmseitig angeordneten Leitschaufeln bedeutet dies, dass eine Leitschaufelreihe näher an der Einrichtung zum Einbringung des Reduktionsmittels angeordnet werden kann, ohne dabei den Strömungsquerschnitt am austrittsseitigen Ende des Oxidationskatalysators zu verringern. Somit kann die Ausbildung eines Wandfilms verhindert werden und eine sehr frühe Zerkleinerung der Reduktionsmitteltröpfchen in feinere Tröpfchen erfolgen. Insgesamt ist somit die am weitesten stromaufwärts angeordnete Leitschaufelreihe näher an der Düse der Reduktionsmittelzuführeinrichtung angeordnet, wodurch die Reduktionsmitteltröpfchen auf den Leitschaufeln der Misch- und/oder Verdampfungseinrichtung auftreffen, bevor sie an der Wand auftreffen können. Insbesondere wird das Reduktionsmittel durch die Leitschaufeln in kleinere Tröpfchen aufgeteilt, die so eher dem Strömungsverlauf folgen können und sich besser verdampfen lassen als größere Tröpfchen.

Gemäß einer anderen vorteilhaften Ausführungsform sind an der ersten und/oder zweiten langen Seitenwand an einem abströmseitigen axialen Ende mehrere Leitschaufeln angeordnet, die in Richtung zur jeweils gegenüberliegenden langen Seitenwand abstehen und gegenüber der Axialrichtung angestellt sind.

Bei einer Anordnung von Leitschaufeln an dem abströmseitigen Ende der Misch- und/oder Verdampfungseinrichtung kann eine intensive Durchmischung und Verdampfung von den in weiter stromaufwärts angeordneten Leitschaufeln bereits verkleinerten Reduktionsmitteltröpfchen erfolgen.

Bei einer weiteren vorteilhaften Ausführungsform sind entlang zumindest einer langen Seitenwand an einem axialen Ende die Leitschaufeln quer zur Axialrichtung so zueinander angeordnet, dass die den kurzen Seitenwänden am nächsten gelegenen Leitschaufeln in Axialrichtung einen größeren Abstand zu dem gegenüberliegenden axialen Ende dieser langen Seitenwand aufweisen als die quer zur Axialrichtung jeweils weiter von den kurzen Seitenwänden beabstandet angeordneten Leitschaufeln.

Durch eine solche Anordnung der Leitschaufeln einer langen Seitenwand zueinander ergibt sich aus der Summe der Leitschaufeloberflächen anströmseitig insgesamt eine in etwa konkave Anordnung der Leitschaufeln entlang eines Radius bzw. eine in etwa konkave Auftrefffläche für Reduktionsmitteltröpfchen. Somit wird bei einem gleichbleibenden Strömungsquerschnitt insgesamt eine größere Auftrefffläche bzw. Strömungsleitfläche in der Misch- und/oder Verdampfungseinrichtung erreicht.

Gemäß einer anderen vorteilhaften Ausführungsform sind entlang zumindest einer langen Seitenwand an einem axialen Ende die Leitschaufeln quer zur Axialrichtung so zueinander angeordnet, dass die den kurzen Seitenwänden am nächsten gelegenen Leitschaufeln in Axialrichtung einen kleineren Abstand zu dem gegenüberliegenden axialen Ende dieser langen Seitenwand aufweisen als die quer zur Axialrichtung jeweils weiter von den kurzen Seitenwänden beabstandet angeordneten Leitschaufeln.

Durch eine solche Anordnung der Leitschaufeln einer langen Seitenwand zueinander ergibt sich aus der Summe der Leitschaufeloberflächen anströmseitig insgesamt eine in etwa konvexe Anordnung der Leitschaufeln entlang eines Radius bzw. eine in etwa konvexe Auftrefffläche für Reduktionsmitteltröpfchen. Somit wird bei einem gleichbleibenden Strömungsquerschnitt insgesamt eine größere Auftrefffläche bzw. Strömungsleitfläche in der Misch- und/oder Verdampfungseinrichtung erreicht.

Bei einer weiteren vorteilhaften Ausführungsform ist der Abstand in Axialrichtung von den Leitschaufeln an einem axialen Ende der ersten langen Seitenwand zu dem gegenüberliegenden axialen Ende der ersten langen Seitenwand bei Leitschaufeln, die näher an der ersten kurzen Seitenwand angeordnet sind, größer ist als bei Leitschaufeln, die näher an der zweiten kurzen Seitenwand angeordnet sind, wobei der Abstand in Axialrichtung von den Leitschaufeln an einem axialen Ende der zweiten langen Seitenwand zu dem gegenüberliegenden axialen Ende der zweiten langen Seitenwand bei Leitschaufeln, die näher an der ersten kurzen Seitenwand angeordnet sind, kürzer ist als bei Leitschaufeln, die näher an der zweiten kurzen Seitenwand angeordnet sind.

Durch diese Anordnung verläuft die Leitschaufelreihe der ersten langen Seitenwand von der ersten kurzen Seitenwand aus linear oder konkav entlang eines Radius schräg in Strömungsrichtung und die Leitschaufelreihe der zweiten langen Seitenwand von der ersten kurzen Seitenwand aus linear oder konkav entlang eines Radius schräg entgegen der Strömungsrichtung. Dadurch kann unter Berücksichtigung der Strömungsverhältnisse in der Mischkammer und der Art der Einbringung des Reduktionsmittels der Abstand der einzelnen Leitschaufeln so gewählt werden, dass möglichst wenig Reduktionsmittel an der Mischkammerwand auftrifft und eine sehr gute Durchmischung des Reduktionsmittels erfolgt.

Gemäß einer anderen vorteilhaften Ausführungsform weist der flache durchströmbare Querschnitt in einer ersten senkrecht zur Axialrichtung verlaufenden Richtung eine erste Weite auf, der größer ist als eine zweite Weite in einer senkrecht zur Axialrichtung und senkrecht zur ersten Richtung verlaufenden zweiten Richtung.

Der flache Querschnitt der Misch- und/oder Verdampfungseinrichtung ermöglicht die Anordnung der Leitschaufeln quer zur Axialrichtung in einer Reihe nebeneinander, wodurch ein großflächiges seitliches Ablenken der Strömung in Richtung einer der kurzen Seitenwände möglich ist. Die Einbringung des Reduktionsmittels in den Abgasstrom erfolgt nach dem Austritt der Strömung aus dem Oxidationskatalysator, d. h. in einem Bereich, in dem die Strömung in der Mischkammer um 90° umgelenkt wird. Ein Ablenken in eine orthogonal dazu stehende Richtung, also in Richtung der kurzen Seitenwände, ermöglicht somit eine sehr effektive Durchmischung des Reduktionsmittels mit dem Abgasstrom, da eine Umlenkung der Strömung in zwei orthogonal zueinander stehende Richtungen erfolgt.

Eine erfindungsgemäße Abgasanlage für eine Brennkraftmaschine, insbesondere eines Kraftfahrzeugs, umfasst zumindest einen SCR-Katalysator, eine Reduktionsmittelzuführeinrichtung, die zumindest einen Injektor zum Zuführen eines Reduktionsmittels zum Abgasstrom stromauf des SCR-Katalysators aufweist, mit wenigstens einer Misch- und /oder Verdampfungseinheit nach, die zwischen dem wenigsten einen Injektor und dem wenigstens einen SCR-Katalysator angeordnet ist.

Weitere wichtige Merkmale und Vorteile der Erfindung ergeben sich aus den Unteransprüchen, aus den Zeichnungen und aus der zugehörigen Figurenbeschreibung anhand der Zeichnungen. Bevorzugte Ausführungsbeispiele der Erfindung sind in den Zeichnungen dargestellt und werden in der nachfolgenden Beschreibung näher erläutert, wobei sich gleiche Bezugszeichen auf gleiche oder ähnliche oder funktional gleiche Bauteile beziehen.

Es zeigen, jeweils schematisch,
- Figur 1: eine stark vereinfachte, schaltplanartige Prinzipdarstellung einer Brennkraftmaschine mit einer Abgasanlage,
- Figur 2: eine vereinfachte Schnittansicht von einem Oxidationskatalysator und einem SCR-Katalysator, die über eine Mischkammer miteinander verbunden sind, sowie eine Ansicht einer in der Mischkammer angeordneten Misch- und/oder Verdampfungseinrichtung,
- Figur 3: eine stark vereinfachte Schnittdarstellung eines Oxidationskatalysators, einem SCR-Katalysator und einer Mischkammer, sowie einer Eingabevorrichtung mit schematisch dargestelltem kegelförmigen Reduktionsmittelstrahl und einer Misch- und/oder Verdampfungseinrichtung,
- Figur 4: eine perspektivische Darstellung einer weiteren Ausführungsform der Misch- und/oder Verdampfungseinrichtung,
- Figur 5: eine Aufsicht auf die in Figur 4 gezeigte Ausführungsform,
- Figur 6: eine weitere perspektivische Darstellung der in Figur 4 gezeigten Ausführungsform,
- Figur 7: eine weitere perspektivische Darstellung der in Figur 4 gezeigten Ausführungsform,
- Figur 8A bis Figur 8C: mehrere Schnittdarstellungen der Abgasanlage, in der jeweils eine Ansicht einer Ausführungsform der Misch- und/oder Verdampfungseinrichtung zu sehen ist, und
- Figur 9: eine vereinfachte Schnittdarstellung, in der eine weitere Ausführungsform der Abgasanlage dargestellt ist, bei der der Oxidationskatalysator, die Mischkammer und der SCR-Katalysator linear in einer Reihe angeordnet sind.

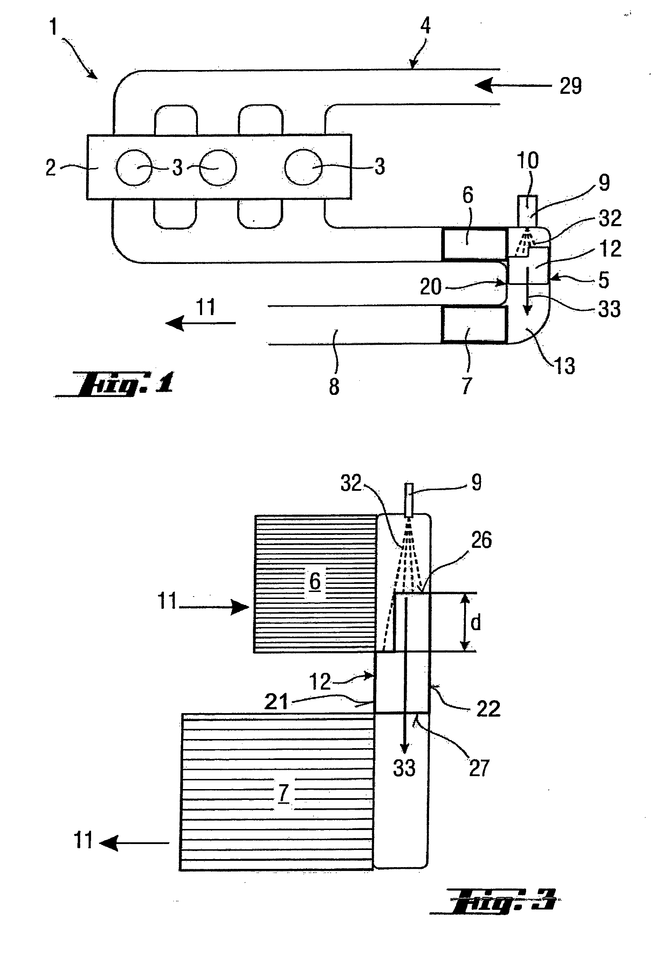

Entsprechend Figur 1 umfasst eine Brennkraftmaschine 1 in üblicher Weise einen Motorblock 2, der mehrere Zylinder 3 aufweist. Eine Frischluftanlage 4 versorgt die Zylinder 3 des Motorblocks 2 mit Frischluft. Ein entsprechender Frischluftstrom ist dabei durch einen Pfeil 29 angedeutet. Eine Abgasanlage 5 führt im Betrieb der Brennkraftmaschine 1 Verbrennungsabgase von den Zylindern 3 des Motorblocks 2 ab. Ferner bewirkt die Abgasanlage 5 eine Abgasreinigung bzw. Abgasnachbehandlung. Hierzu ist die Abgasanlage 5 mit wenigstens einem Diesel-Oxidationskatalysator 6 und einem SCR Katalysator 7 ausgestattet, die auf geeignete Weise in einen Abgasstrang 8 der Abgasanlage 5 eingebunden sind. Um eine platzsparende Ausgestaltung zu ermöglichen, kann eine U-förmige Anordnung von Diesel-Oxidations-katalysator 6 und SCR Katalysator 7 vorgesehen sein. In diesem Fall sind der Diesel-Oxidationskatalysator 6 und der SCR Katalysator 7 so nebeneinander angeordnet, dass ihre Längsachsen parallel zueinander verlaufen. Die Strömung im Diesel-Oxidationskatalysator 6 verläuft dabei entgegengesetzt zu der im SCR Katalysator 7. Das abströmseitige Ende des Diesel-Oxidationskatalysators 6, d. h. das Ende, aus dem der Abgasstrom aus dem Diesel-Oxidationskatalysator 6 austritt, und das anströmseitige Ende des SCR Katalysators 7, d. h. das Ende, in das der Abgasstrom in den SCR-Katalysator eintritt, sind über einen so genannte Trichter bzw. eine Mischkammer 13 miteinander verbunden. In dieser erfolgt eine Umlenkung des Abgasstroms nach dem Austritt aus dem Diesel-Oxidationskatalysator 6 um 90° und eine erneute Umlenkung des Abgasstroms um 90° vor dem Eintritt in den SCR-Katalysator 7.

Der SCR Katalysator 7 kann dabei auch als ein Partikelfilter bzw. Dieselpartikelfilter ausgeführt sein, der mit einer entsprechenden Beschichtung versehen ist. Ferner umfasst die Abgasanlage 5 eine Reduktionsmittelzuführeinrichtung 9, die zumindest einen Injektor 10 bzw. ein Rohr 10 aufweist, mit dessen Hilfe ein Reduktionsmittel in einen Abgasstrom 11 eingebracht werden kann, der im Betrieb der Brennkraftmaschine 1 im Abgasstrang 8 strömt und durch Pfeile angedeutet ist. Die Eindüsung des flüssigen Reduktionsmittels in den Abgasstrom 11 erfolgt dabei stromauf des SCR-Katalysators 7.

Ferner umfasst die Abgasanlage 5 zumindest eine Misch- und/oder Verdampfungseinrichtung 12, die im Folgenden verkürzt mit Einrichtung 12 bezeichnet wird. Die Einrichtung 12 ist dabei in der Mischkammer 13 zwischen dem Injektor 9 und dem SCR-Katalysator 7 angeordnet, so dass das Abgas mit dem zugeführten Reduktionsmittel zuerst die Einrichtung 12 durchströmen muss, bevor das Gemisch in den SCR-Katalysator 7 einströmen kann.

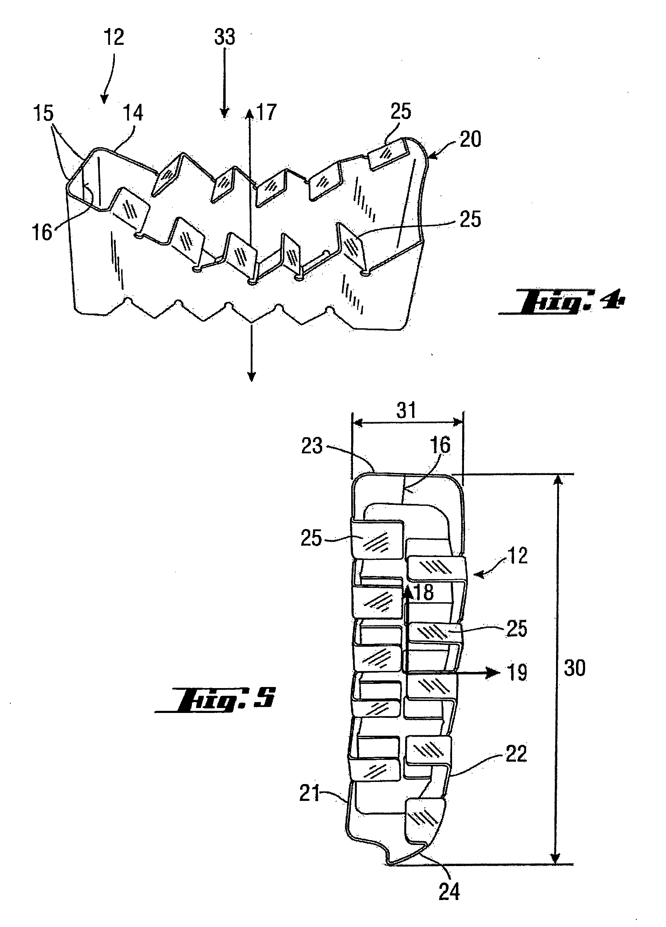

Wie in Figuren 4 und 5 dargestellt ist, besteht die Einrichtung 12 aus einem beispielsweise aus ferritischen oder austenitischen Stahl gefertigten Blech 14, dessen Enden 15 so umgebogen und an einer Verbindungsstelle 16 zusammengefügt sind, dass ein flacher durchströmbarer Querschnitt bzw. Tragkörper 20, beispielsweise in der Art eines Vierkantrohrs entsteht. Die Strömungsrichtung 33 durch diesen Querschnitt verläuft dabei parallel zu einer Axialrichtung 17 des Rohrs.

Ein wie oben beschriebener "flacher" durchströmbarer Querschnitt charakterisiert sich dadurch, dass er in einer ersten senkrecht zur Axialrichtung 17 verlaufenden Richtung eine erste Weite 30 bzw. einen Durchmesser aufweist, der größer ist als eine zweite Weite 31 bzw. ein Durchmesser in einer senkrecht zur Axialrichtung 17 und senkrecht zur ersten Richtung 18 verlaufenden zweiten Richtung 19. Insbesondere kann der Durchmesser in der einen Richtung mindestens doppelt so groß sein wie in der anderen Richtung. Ausgeschlossen sind dadurch kreisförmige Querschnitte, während ovale und elliptische Querschnitte ebenfalls flach sind oder sein können. Die Begriffe "lang" und "kurz" sind hier nicht absolut, sondern relativ zueinander zu verstehen, so dass die langen Seitenwände in der Umfangsrichtung länger sind als die kurzen Seitenwände. Je nach Geometrie des durchströmbaren Querschnitts der Einrichtung sind die langen Seitenwände zweckmäßig eben, während die kurzen Seitenwände gekrümmt sein können.

Da der durchströmbare Querschnitt der Einrichtung 12 flach ist, besitzt der Tragkörper 20 zwei lange Seitenwände 21, 22, die einander gegenüberliegen, sowie zwei kurze Seitenwände 23, 24 die ebenfalls einander gegenüberliegen. Die kurzen Seitenwände 23, 24 verbinden dabei jeweils die beiden langen Seitenwände 21, 22.

Des Weiteren ist die Einrichtung 12 mit mehreren Leitschaufeln 25 ausgestattet, die dabei jeweils von einer der langen Seitenwänden 21, 22 in Richtung zur anderen langen Seitenwand 21, 22 abstehen und dabei an einem axialen Ende 26 oder 27 der Einrichtung 12 bzw. des Tragkörpers 20 bzw. der jeweiligen langen Seitenwand 21, 22 abstehen. Sofern die Abgasströmung entsprechend dem Pfeil 33 orientiert ist, bildet das eine, zuerst angeströmte axiale Ende eine Anströmseite 26, die im Folgenden ebenfalls mit 26 bezeichnet wird, während das andere axiale Ende 27 dann eine Abströmseite 27 bildet, die im Folgenden ebenfalls mit 27 bezeichnet wird.

Die Leitschaufeln 25 erstrecken sich jeweils geradlinig sowie parallel zueinander. Ferner sind die Leitschaufeln 25 bei den hier gezeigten Ausführungsformen jeweils eben ausgestaltet. Außerdem sind sie gegenüber der Axialrichtung 17 angestellt. Bei den gezeigten Beispielen beträgt ein Anstellwinkel der Leitschaufeln 25 gegenüber der Axialrichtung 17 jeweils 45° im Rahmen üblicher Herstellungstoleranzen.

Die Leitschaufeln 25 erstrecken sich quer zur Axialrichtung 17 und sind außerdem quer zu ihrer Längserstreckung und quer zur Axialrichtung 17 nebeneinander in einer Reihe angeordnet, die auch als Schaufelreihe 28 bezeichnet werden kann.

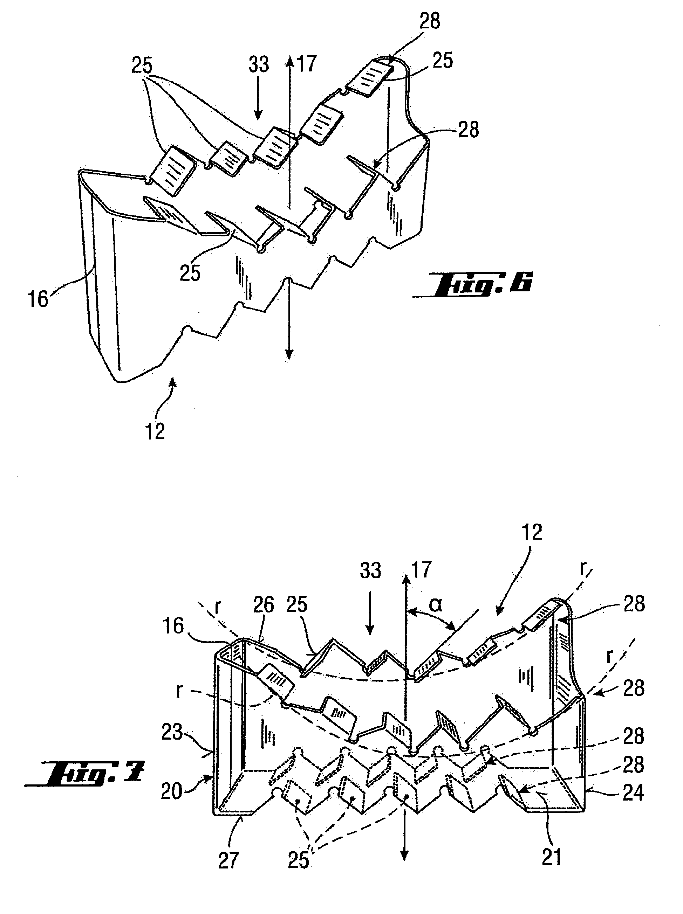

Bei den Ausführungsformen der Figuren 4 bis 7 ist vorgesehen, dass an beiden langen Seitenwänden 21, 22 zumindest an einem axialen Ende 26, 27 jeweils Leitschaufeln 25 angeordnet sind, die in Richtung zur anderen langen Seitenwand 21, 22 abstehen. Bei den hier gezeigten Ausführungsformen sind dadurch am jeweiligen axialen Ende 26, 27, also an der Anströmseite 26 bzw. an der Abströmseite 27 jeweils zwei nebeneinander angeordnete, parallel zueinander verlaufende Schaufelreihen 28 vorgesehen. Beispielhaft sind hier die sich gegenüberliegenden Leitschaufeln 25 so dimensioniert, dass sie sich ausgehend von der zugehörigen langen Seitenwand 21, 22 bis zu einer Längsmittelebene erstrecken, die mittig zwischen den beiden langen Seitenwänden 21, 22 verläuft. Alternativ sind auch Ausführungsformen denkbar, bei denen nur an jeweils einer langen Seitenwand 21 oder nur an jeweils einem axialen Ende 26 Leitschaufelreihen 28 angeordnet sein können.

In einer weiteren alternativen Ausführungsform können sich die Leitschaufeln 25 der beiden langen Seitenwände 21, 22 soweit in Richtung der anderen Seitenwand 21, 22 erstrecken, dass sich die Leitschaufeln 25 der einen langen Seitenwand 21 bis in die Lücken zwischen benachbarten Leitschaufeln 25 der anderen Seitenwand 22 hineinerstrecken, so dass letztlich eine gemeinsame Leitschaufelreihe 28 gebildet wird, die durch die Leitschaufeln 25 der beiden langen Seitenwänden 21, 22 gebildet wird, wobei sich innerhalb dieser gemeinsamen Leitschaufelreihe 28 die Leitschaufeln 25 der beiden langen Seitenwände 21, 22 abwechseln.

Bei den hier gezeigten Ausführungsformen sind die Leitschaufeln 25 jeweils so angeordnet und dimensioniert, dass sie beabstandet zu der jeweiligen langen Seitenwand 21, 22, von der sie ausgehen, freistehend enden bzw. ein freies Ende 31 aufweisen. So sind die Leitschaufeln 25 der gezeigten Ausführungsformen insbesondere kontaktfrei zur jeweils gegenüberliegenden langen Seitenwand 21, 22 und kontaktfrei zu den anderen Leitschaufeln 25.

Sofern wie in der Ausführungsform der Figuren 4 bis 7 erkennbar an beiden axialen Enden 26, 27 Leitschaufeln 25 vorgesehen sind, können diese entweder in derselben Richtung oder entgegengesetzt zur Axialrichtung 17 um einen Winkel α angestellt sein. Die Leitschaufeln 25, die am selben axialen Ende 26, 27, jedoch an gegenüberliegenden langen Seitenwänden 21, 22 angeordnet sind, sind in den gezeigten Ausführungsformen entgegengesetzt zur Axialrichtung 17 angestellt. Mit anderen Worten, an der Anströmseite 26 und/oder an der Abströmseite 27 sind die Leitschaufeln 25 der einen Schaufelreihe 28, die an der einen langen Seitenwand 21 ausgebildet ist, entgegengesetzt zu den Leitschaufeln 25 der anderen Schaufelreihe 28, die an der anderen langen Seitenwand 22 ausgebildet sind, zur Axialrichtung 17 angestellt.

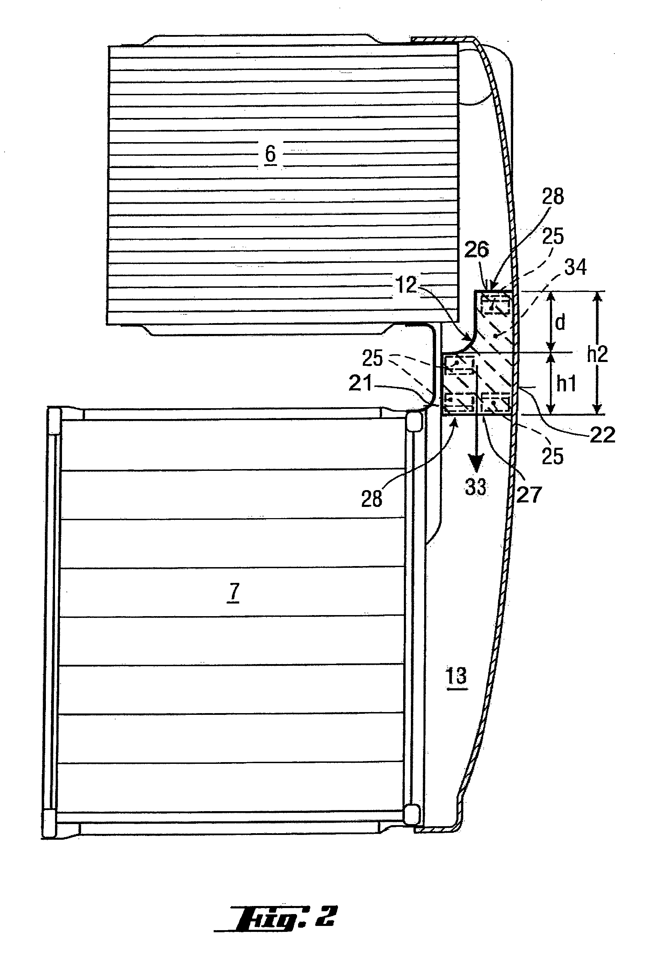

Wie in den Figuren 2 und 3 zu sehen ist, sind die Seitenwände 21, 22 in Axialrichtung nicht alle gleich hoch ausgeführt. So erstreckt sich eine erste lange Seitenwand 21 im Wesentlichen bis zu einer bestimmten Höhe h₁ in Axialrichtung, wohingegen sich eine zweite lange Seitenwand 22 im Vergleich zu der ersten langen Seitenwand 21 bis zu einer größeren Höhe h₂ in Axialrichtung erstreckt. Die erste lange Seitenwand 21 und die zweite lange Seitenwand 22 unterscheiden sich in ihrer Höhe also um einen Abstand d. Wie beispielsweise in Figur 2 dargestellt ist, erstreckt sich im Anschluss an die am weitesten Stromaufwärts gelegene Leitschaufelreihe 28 eine Mischzone 34, in der durch die Leitschaufeln 25 eine intensive Durchmischung des Reduktionsmittels mit dem Abgasstrom erfolgt.

Da die Leitschaufelreihen 28 an den axialen Enden 26, 27 angeordnet sind, ergibt sich somit insbesondere am anströmseitigen axialen Ende 26 eine zueinander gestufte Anordnung der Leitschaufelreihen 28, wobei die Stufenhöhe dem Abstand d entspricht. Auf dies Weise treffen mit der Abgasströmung mitgeführte Teilchen oder Tröpfchen, wie z. B. eingedüstes Reduktionsmittel 32, früher auf die an der zweiten langen Seitenwand 22 angeordneten Leitschaufelreihe 28 als auf die an der ersten langen Seitenwand 21 angeordneten Leitschaufelreihe 28.

In der in den Figuren 4 bis 7 dargestellten Ausführungsform erstrecken sich die kurzen Seitenwände 23, 24 in Axialrichtung nicht bis zu einer einheitlichen Höhe, wobei in dem gezeigten Ausführungsbeispiel eine erste kurze Seitenwand 23 eine einheitliche Höhe aufweist und eine zweite kurze Seitenwand 24 am Übergang zu der ersten langen Seitenwand 21 eine geringere Höhe aufweist am Übergang zu der zweiten langen Seitenwand 22.

Weiterhin verlaufen die Leitschaufelreihen 28 nicht geradlinig. Die Leitschaufeln 25 sind also in Bezug auf die Axialrichtung 17 nicht alle auf derselben Höhe angeordnet, sondern in Axialrichtung 17 zueinander versetzt. Genauer gesagt bilden die an den anströmseitigen axialen Enden angeordneten Leitschaufeln 25 jeder Seitenwand um einen Radius r gebogene Leitschaufelreihen 28, die jeweils um orthogonal zur Axialrichtung 17 und orthogonal zu den langen Seitenwänden 21, 22 stehende Achsen gebogen sind. Dabei verläuft die Biegung der Leitschaufelreihen 28 konkav im Verhältnis zu der Einrichtung 12, d. h. die anströmseitigen Leitschaufeln 25 der jeweiligen langen Seitenwand 21, 22 sind quer zur Axialrichtung so zueinander angeordnet, dass die den kurzen Seitenwänden 23, 24 am nächsten gelegenen Leitschaufeln in Axialrichtung 20 einen größeren Abstand zu dem gegenüberliegenden, abströmseitigen axialen Ende 26, 27 dieser langen Seitenwand aufweisen als die quer zur Axialrichtung 20 jeweils weiter von den kurzen Seitenwänden beabstandet angeordneten Leitschaufeln 25. Denkbar wäre jedoch auch eine Biegung der Leitschaufelreihen 28, die konvex zu der Einrichtung 12 verläuft. Durch diese Anordnung ist es möglich, bei gleichbleibendem durchströmbaren Querschnitt des Tragkörpers mehr Leitschaufeln 25 bzw. eine größere Auftrefffläche der Leitschaufeln 25 in dem Abgasstrom anzuordnen.

Weiterhin sind die Leitschaufelreihen 28 der jeweiligen langen Seitenwand 21, 22 nicht nebeneinander angeordnet, sondern verlaufen scherenartig zueinander gespreizt. Das bedeutet, dass der Abstand in Axialrichtung 17 von den Leitschaufeln 25 an dem anströmseitigen axialen Ende 26 der ersten langen Seitenwand 21 zu dem gegenüberliegenden, d. h. abströmseitigen axialen Ende 27 der ersten langen Seitenwand 21 bei Leitschaufeln, die näher an der ersten kurzen Seitenwand 23 angeordnet sind, größer ist als bei Leitschaufeln 25, die näher an der zweiten kurzen Seitenwand 24 angeordnet sind. Dahingegen ist der Abstand in Axialrichtung 17 von den Leitschaufeln 25 an dem anströmseitigen axialen Ende 26 der zweiten langen Seitenwand 22 zu dem gegenüberliegenden axialen Ende 27 der zweiten langen Seitenwand 22 bei Leitschaufeln 25, die näher an der ersten kurzen Seitenwand 23 angeordnet sind, kürzer ist als bei Leitschaufeln 25, die näher an der zweiten kurzen Seitenwand 24 angeordnet sind.

Im den beschriebenen Ausführungsbeispielen ist der Tragkörper 20 ein Blechformteil, das integral die vier Seitenwände 21, 22, 23, 24 umfasst. Ferner sind die Leitschaufeln 25 an der jeweiligen langen Seitenwand 21, 22 integral ausgeformt, so dass letztlich die komplette Einrichtung 12 aus einem einzigen Blechformteil hergestellt ist. Die Herstellung kann dabei aus einem langgestreckten streifenförmigen Blechrohling erfolgen, bei dem zunächst die Leitschaufeln 25 freigeschnitten werden. Anschließend können die Leitschaufeln 25 abgewinkelt werden. Schließlich kann der Blechstreifen entsprechend dem flachen durchströmbaren Querschnitt der Einrichtung 12 gebogen werden, um die langen und kurzen Seitenwände 21, 22, 23, 24 des Tragkörpers 20 auszubilden. Die Längsenden des Rohlings können an der einen kurzen Seitenwand 23 entsprechend einer Verbindungsnaht aneinander befestigt sein.

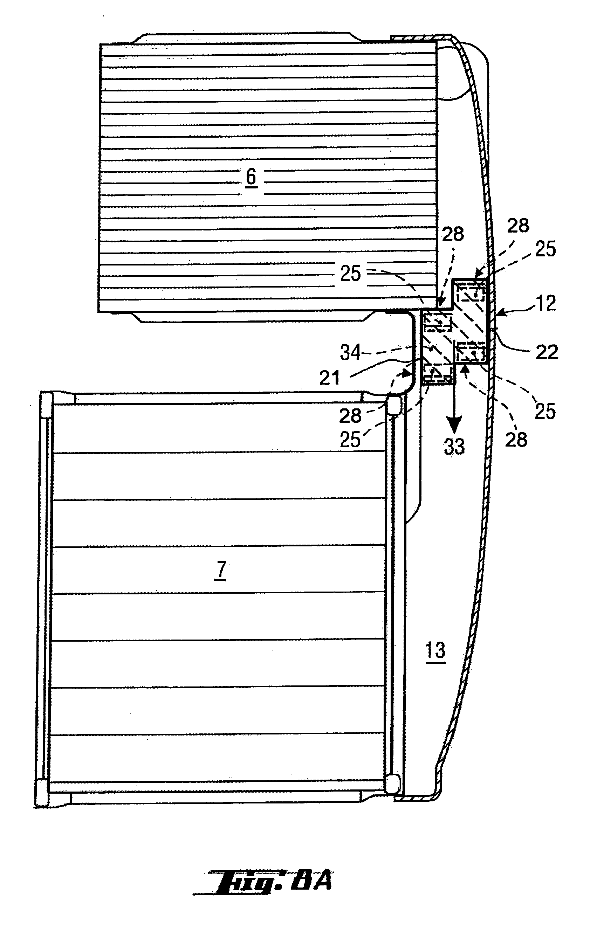

In Figuren 8A bis 8C sind schematisch mehrere weitere Ausführungsformen der Einrichtung 12 im eingebauten Zustand dargestellt, die sich im Wesentlichen durch die unterschiedlichen Höhen der langen Seitenwände 21, 22 unterscheiden. Durch die im Folgenden beschriebenen Ausführungsformen können unterschiedliche Arten der Eindüsung von Reduktionsmittel und unterschiedliche Strömungsverhältnisse in der Mischkammer berücksichtigt werden.

In Figur 8A ist eine Ausführungsform dargestellt, bei der sich die erste lange Seitenwand 21 anströmseitig bis zu dem Oxidationskatalysator 6 erstreckt. Die zweite lange Seitenwand 22 erstreckt sich wie bei der ersten beschriebenen Ausführungsform anströmseitig weiter entgegen der Strömungsrichtung als die erste lange Seitenwand 21, wodurch sich die an der zweiten langen Seitenwand 22 angeordnete Leitschaufelreihe 28 in der Projektion leicht mit der Austrittsfläche des Oxidationskatalysators 6 überdeckt. In Längsrichtung des Oxidationskatalysators ist diese Leitschaufelreihe 28 jedoch von dem Oxidationskatalysator 6 beabstandet, so dass der Strömungsquerschnitt an der Austrittsseite des Oxidationskatalysators 6 nicht verringert wird. Abströmseitig erstrecken sich die beiden langen Seitenwände 21, 22 bei dieser Ausführungsform jedoch nicht wie bei der ersten Ausführungsform bis auf dieselbe Höhe in Strömungsrichtung. Vielmehr erstreckt sich die erste lange Seitenwand 21 bei dieser Ausführungsform weiter in Strömungsrichtung als die zweite lange Seitenwand 22, wodurch sich auch abströmseitig eine gestufte Anordnung der an beiden langen Seitenwänden 21, 22 angeordneten Leitschaufelreihen 28 ergibt. In dieser Ausführungsform ist die an der ersten langen Seitenwand 21 angeordnete abströmseitige Leitschaufelreihe 28 näher an dem SCR-Katalysator 7 angeordnet als die an der zweiten langen Seitenwand 22 abströmseitig angeordnete Leitschaufelreihe 28.

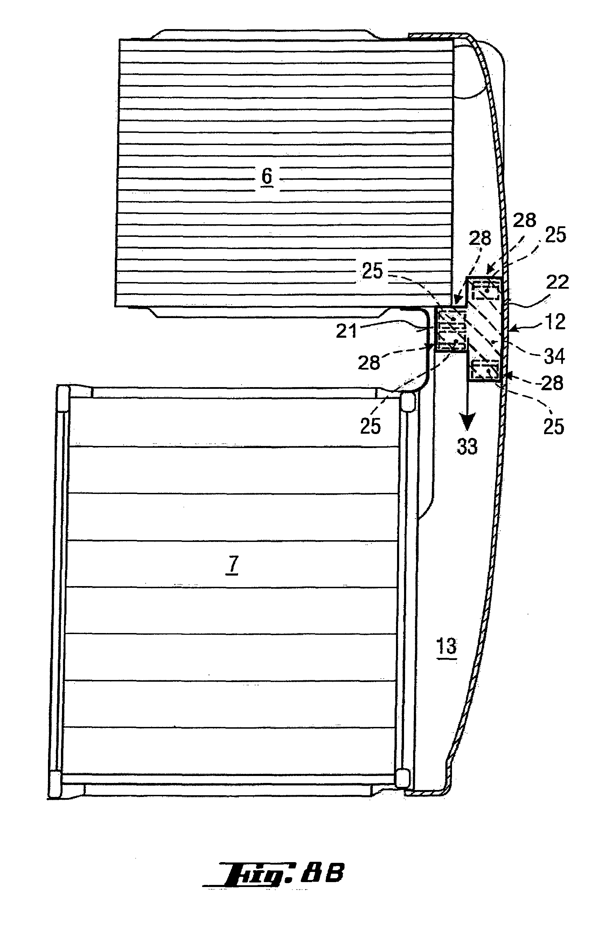

Bei der in Figur 8B dargestellten Ausführungsform sind die anströmseitigen axialen Enden der langen Seitenwände 21, 22 so ausgeführt wie bei der in Figur 8A dargestellten Ausführungsform. Abströmseitig erstreckt sich bei dieser Ausführungsform jedoch die zweite lange Seitenwand 22 weiter in Strömungsrichtung als die erste lange Seitenwand 21. Somit ergibt sich bei dieser Ausführungsform ebenfalls eine gestufte Anordnung der an den abströmseitigen axialen Enden der langen Seitenwände 21, 22 angeordneten Leitschaufelreihen 28, wobei bei dieser Ausführungsform die an der zweiten langen Seitenwand 22 abströmseitig angeordnete Leitschaufelreihe 28 näher an dem SCR-Katalysator 7 angeordnet ist als die an der ersten langen Seitenwand 21 abströmseitig angeordnete Leitschaufelreihe 28.

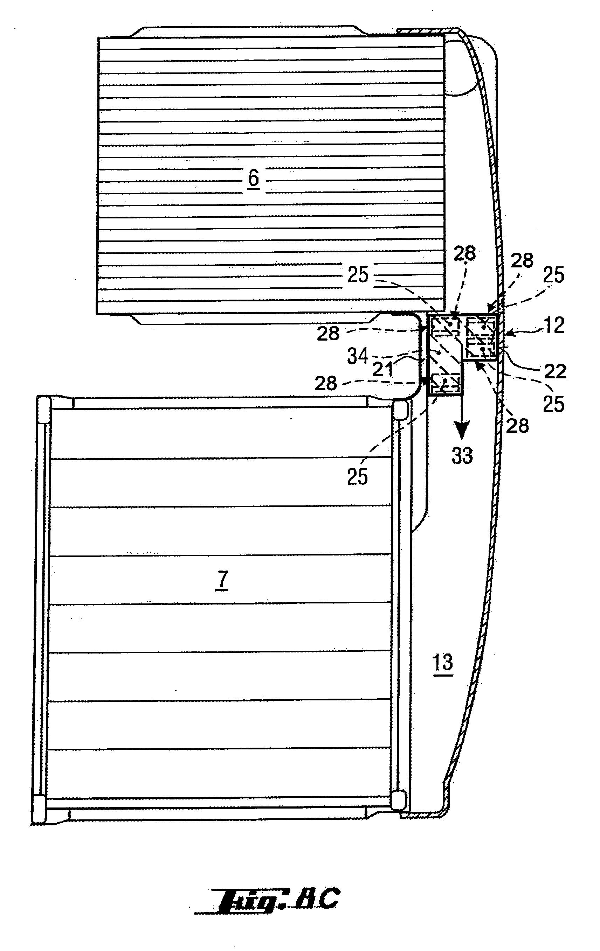

In der in Figur 8C dargestellten Ausführungsform sind die anströmseitigen axialen Enden der langen Seitenwände 21, 22 entgegen den bisherigen Ausführungsformen so ausgeführt, dass sie sich in Strömungsrichtung bis zu einer gleichen Höhe erstrecken. In diesem Fall schließen die beiden axialen Enden der langen Seitenwände 21, 22 auf der Höhe der Austrittsfläche des Oxidationskatalysators ab, wodurch sich anströmseitig keine gestufte Anordnung der Leitschaufelreihen 28 ergibt. Abströmseitig gleicht diese Ausführungsform der in Figur 8A dargestellten Ausführungsform.

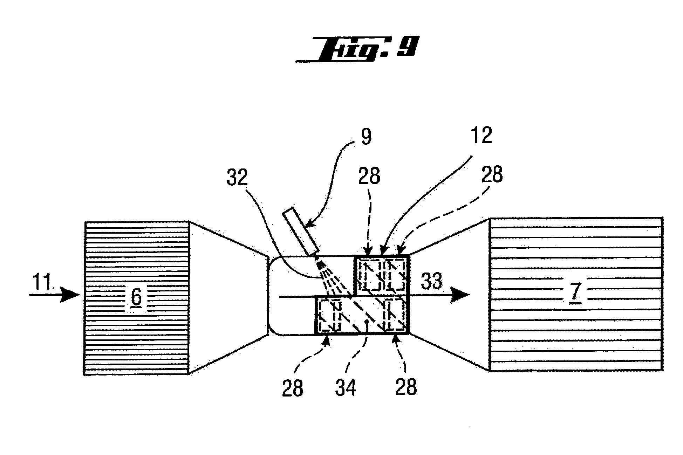

In Figur 9 ist eine weitere Ausführungsform dargestellt, bei der keine Umlenkung der Abgasströmung zwischen dem Oxidationskatalysator und dem SCR-Katalysator erfolgt. Stattdessen sind der Oxidationskatalysator, die Mischkammer und der SCR-Katalysator linear in Reihe angeordnet. Die Eingabe des Reduktionsmittels erfolgt somit in einem Abschnitt, in dem die Strömung geradlinig verläuft. Entsprechend muss das Reduktionsmittel in einem Winkel zur Strömungsrichtung, d. h. schräg zu dieser eingegeben werden. Um zu erreichen, dass das Reduktionsmittel großflächig über dem Strömungswinkel verteilt wird, ist ein steilerer Eingabewinkel von Vorteil. Bei einem zu steilen Eingabewinkel besteht jedoch die Gefahr, dass Reduktionsmittel 32 an einer der Reduktionsmittelzuführeinrichtung 9 gegenüberliegenden Wand auftrifft, und einen Wandfilm ausbildet. Wie bei den oben beschriebenen Ausführungsformen ist die Einrichtung 12 so ausgebildet, dass die Leitschaufelreihen 28 in Axialrichtung 33 zueinander versetzt sind. Somit kann die weiter stromaufwärts angeordnete Leitschaufelreihe 28 so angeordnet sein, dass sie der Reduktionsmittelzuführeinrichtung 9 gegenüberliegt. Reduktionsmittel 32, das bei einem zu steilen Eingabewinkel an der Wand der Mischkammer auftreffen würde, trifft somit auf die stromaufwärtige Leitschaufelreihe 28 und wird dem Abgasstrom zugeführt.

Obwohl bestimmte Elemente, Ausführungsformen und Anwendungen der vorliegenden Erfindung dargestellt und beschrieben worden sind, versteht es sich, dass die Erfindung nicht darauf beschränkt ist und der Fachmann Modifikationen vornehmen kann, ohne vom Gültigkeitsbereich der vorliegenden Offenbarung, insbesondere angesichts der obigen Lehre, abzuweichen.

## Patentansprüche

1. Misch- und/oder Verdampfungseinrichtung für eine Abgasanlage (5) einer Brennkraftmaschine (1), insbesondere eines Kraftfahrzeugs,
mit einem Tragkörper (20), der einen quer zur Axialrichtung (17) der Einrichtung (12) verlaufenden, flachen, durchströmbaren Querschnitt der Einrichtung (12) in der Umfangsrichtung umschließt,
wobei der Tragkörper (20) eine erste und eine zweite einander gegenüberliegende lange Seitenwand (21, 22) und eine erste und eine zweite einander gegenüberliegende kurze Seitenwand (23, 24) aufweist,
wobei die kurzen Seitenwände (23, 24) jeweils die langen Seitenwände (21, 22) miteinander verbinden,
wobei an einer der langen Seitenwände (21, 22) zumindest an einem axialen Ende (26, 27) mehrere Leitschaufeln (25) angeordnet sind, die in Richtung zur jeweils gegenüberliegenden langen Seitenwand (21, 22) abstehen und gegenüber der Axialrichtung (17) angestellt sind,
**dadurch gekennzeichnet, dass**
ein axiales Ende (26, 27) der ersten langen Seitenwand (21) gegenüber dem in Axialrichtung (17) auf derselben Seite der Einrichtung (12) angeordneten axialen Ende (26, 27) der zweiten langen Seitenwand (22) in Axialrichtung (17) um einen Abstand (d) versetzt ist.

2. Misch- und/oder Verdampfungseinrichtung für eine Abgasanlage (5) nach Anspruch 1, wobei das anströmseitige axiale Ende (27) der zweiten langen Seitenwand (22) gegenüber dem anströmseitigen axialen Ende (26) der ersten langen Seitenwand (21) in Axialrichtung (17) entgegen der Strömungsrichtung (33) um einen Abstand (d) versetzt ist.

3. Misch- und/oder Verdampfungseinrichtung für eine Abgasanlage (5) nach einem der Ansprüche 1 bis 2, wobei das abströmseitige axiale Ende (27) der zweiten langen Seitenwand (22) gegenüber dem abströmseitigen axialen Ende (26) der ersten langen Seitenwand (21) in Axialrichtung (17) in Strömungsrichtung (33) um einen Abstand (d) versetzt ist.

4. Misch- und/oder Verdampfungseinrichtung für eine Abgasanlage (5) nach einem der vorhergehenden Ansprüche, wobei das abströmseitige axiale Ende (27) der ersten langen Seitenwand (21) gegenüber dem abströmseitigen axialen Ende (27) der zweiten langen Seitenwand (22) in Axialrichtung (17) in Strömungsrichtung (33) um einen Abstand (d) versetzt ist.

5. Misch- und/oder Verdampfungseinrichtung für eine Abgasanlage (5) nach einem der vorhergehenden Ansprüche, wobei an der ersten und/oder zweiten langen Seitenwand (21, 22) an einem anströmseitigen axialen Ende (26, 27) mehrere Leitschaufeln (25) angeordnet sind, die in Richtung zur jeweils gegenüberliegenden langen Seitenwand (21, 22) abstehen und gegenüber der Axialrichtung (17) um einen Winkel (α) angestellt sind.

6. Misch- und/oder Verdampfungseinrichtung für eine Abgasanlage (5) nach einem der vorhergehenden Ansprüche, wobei an der ersten und/oder zweiten langen Seitenwand (21, 22) an einem abströmseitigen axialen Ende (26, 27) mehrere Leitschaufeln (25) angeordnet sind, die in Richtung zur jeweils gegenüberliegenden langen Seitenwand (21, 22) abstehen und gegenüber der Axialrichtung (17) Winkel (α) angestellt sind.

7. Misch- und/oder Verdampfungseinrichtung für eine Abgasanlage (5) nach einem der vorhergehenden Ansprüche, wobei entlang zumindest einer langen Seitenwand (21, 22) an einem axialen Ende (26, 27) die Leitschaufeln (25) quer zur Axialrichtung (17) so zueinander angeordnet sind, dass die den kurzen Seitenwänden (23, 24) am nächsten gelegenen Leitschaufeln in Axialrichtung (17) einen größeren Abstand zu dem gegenüberliegenden axialen Ende (26, 27) dieser langen Seitenwand aufweisen als die quer zur Axialrichtung (17) jeweils weiter von den kurzen Seitenwänden beabstandet angeordneten Leitschaufeln (25).

8. Misch- und/oder Verdampfungseinrichtung für eine Abgasanlage (5) nach einem der vorhergehenden Ansprüche, wobei entlang zumindest einer langen Seitenwand (21, 22) an einem axialen Ende (26, 27) die Leitschaufeln (25) quer zur Axialrichtung (17) so zueinander angeordnet sind, dass die den kurzen Seitenwänden (23, 24) am nächsten gelegenen Leitschaufeln (25) in Axialrichtung (17) einen kleineren Abstand zu dem gegenüberliegenden axialen Ende (26, 27) dieser langen Seitenwand (21, 22) aufweisen als die quer zur Axialrichtung (17) jeweils weiter von den kurzen Seitenwänden (23, 24) beabstandet angeordneten Leitschaufeln (25).

9. Misch- und/oder Verdampfungseinrichtung für eine Abgasanlage (5) nach einem der vorhergehenden Ansprüche, wobei der Abstand in Axialrichtung (17) von den Leitschaufeln (25) an einem axialen Ende (26, 27) der ersten langen Seitenwand (21) zu dem gegenüberliegenden axialen Ende (26, 27) der ersten langen Seitenwand (21) bei Leitschaufeln (25), die näher an der ersten kurzen Seitenwand (23) angeordnet sind, größer ist als bei Leitschaufeln (25), die näher an der zweiten kurzen Seitenwand (24) angeordnet sind,
wobei der Abstand in Axialrichtung (17) von den Leitschaufeln (25) an einem axialen Ende (26, 27) der zweiten langen Seitenwand (22) zu dem gegenüberliegenden axialen Ende (26, 27) der zweiten langen Seitenwand (22) bei Leitschaufeln (25), die näher an der ersten kurzen Seitenwand (23) angeordnet sind, kürzer ist als bei Leitschaufeln (25), die näher an der zweiten kurzen Seitenwand (24) angeordnet sind.

10. Misch- und/oder Verdampfungseinrichtung für eine Abgasanlage (5) nach einem der vorhergehenden Ansprüche, wobei der flache durchströmbare Querschnitt in einer ersten senkrecht zur Axialrichtung (17) verlaufenden Richtung (18) eine erste Weite (30) aufweist, die größer ist als eine zweite Weite (31) in einer senkrecht zur Axialrichtung (17) und senkrecht zur ersten Richtung (18) verlaufenden zweiten Richtung (19).

11. Abgasanlage für eine Brennkraftmaschine (1), insbesondere eines Kraftfahrzeugs,
mit wenigstens einem SCR-Katalysator (7),
mit einer Reduktionsmittelzuführeinrichtung (9), die zumindest einen Injektor (10) zum Zuführen eines Reduktionsmittels zum Abgasstrom (11) stromauf des SCR-Katalysators (7) aufweist,
mit wenigstens einer Misch- und/oder Verdampfungseinheit (12) nach einem der Ansprüche 1 bis 10, die zwischen dem wenigsten einen Injektor (10) und dem wenigstens einen SCR-Katalysator (7) angeordnet ist.

## Claims

1. A mixing and/or evaporating device for an exhaust system (5) of an internal combustion engine (1), especially of a motor vehicle,
with a carrier body (20), which surrounds, in the circumferential direction, a flat through-flow cross section of the device (12), said cross-section extending transversely to the axial direction (17) of the device (12),
wherein the carrier body (20) has a first and a second long side wall (21, 22) which are disposed mutually opposed to each other and a first and a second short side wall (23, 24) which are disposed mutually opposed to each other,
wherein the short side walls (23, 24) each connect the two long side walls (21, 22) to one another,
wherein a plurality of guide blades (25), which project in the direction of the respective opposite long side wall (21, 22) and are inclined in relation to the axial direction (17), are arranged at one of the long side walls (21, 22) at at least one axial end (26, 27), **characterized in that** an axial end (26, 27) of the first long side wall (21) is offset in the axial direction (17) by a distance (d) in relation to the axial end (26, 27) of the second long side wall (22) arranged on the same side of the device (12) in the axial direction (17).

2. The mixing and/or evaporating device for an exhaust system (5) in accordance with claim 1, wherein the inflow-side axial end (26) of the second long side wall (22) is offset by a distance (d) against the direction of flow in the axial direction (17) in relation to the inflow-side axial end (26, 27) of the first long side wall (21).

3. The mixing and/or evaporating device for an exhaust system (5) in accordance with claim 1 or 2, wherein the outflow-side axial end (27) of the second long side wall (22) is offset by a distance (d) in the axial direction (17) in relation to the outflow-side axial end (26) of the first long side wall (21).

4. The mixing and/or evaporating device for an exhaust system (5) in accordance with one of the preceding claims, wherein the outflow-side axial end (27) of the first long side wall (21) is offset by a distance (d) in the direction of flow (33) in relation to the outflow-side axial end (26) of the second long side wall (22) in the axial direction (17).

5. The mixing and/or evaporating device for an exhaust system (5) in accordance with one of the preceding claims, wherein a plurality of guide blades (25), which project in the direction of the respective opposite long side wall (26, 27) and are inclined at an angle (α) in relation to the axial direction (17), are arranged at the first and/or second long side wall (21,22) at an inflow-side axial end (26, 27).

6. The mixing and/or evaporating device for an exhaust system (5) in accordance with one of the preceding claims, wherein a plurality of guide blades (25), which project in the direction of the respective opposite long side wall (21, 22) and are inclined at an angle (α) in relation to the axial direction (17), are arranged at the first and/or second long side wall (21, 22) at an outflow-side axial end (26, 27).

7. The mixing and/or evaporating device for an exhaust system (5) in accordance with one of the preceding claims, wherein the guide blades (25) are arranged, in relation to one another, transversely to the axial direction (17) along at least one long side wall (21, 22) at an axial end (26, 27) such that the guide blades (25) located closest to the short side walls (23, 24) have a greater distance in the axial direction (17) from the opposite axial end (26, 27) of said long side wall than do the guide blades (25) arranged further away from the short side walls transversely to the axial direction (17).

8. The mixing and/or evaporating device for an exhaust system (5) in accordance with one of the preceding claims, wherein the guide blades (25) are arranged, in relation to one another, transversely to the axial direction (17) along at least one long side wall (21, 22) at an axial end (26, 27) such that the guide blades (25) located closest to the short side walls have a smaller distance in the axial direction (17) from the opposite axial end (26, 27) of said long side wall than do the guide blades (25) arranged further away from the short side walls transversely to the axial direction (17).

9. The mixing and/or evaporating device for an exhaust system (5) in accordance with one of the preceding claims, wherein the distance in the axial direction (17) from the guide blades (25) at an axial end (26, 27) of the first long side wall (21) to an opposite axial end (26, 27) of the first long side wall (21) is greater in case of guide blades (25) arranged closer to the first short side wall (23) than in case of guide blades (25) arranged closer to the second short side wall (24), wherein the distance in the axial direction (17) from the guide blades (25) at an axial end (26, 27) of the second long side wall (22) to the opposite axial end (26, 27) of the second long side wall (22) is shorter in case of guide blades (25) arranged closer to the first short side wall (23) than in case of guide blades (25) arranged loser to the second short side wall (24).

10. The mixing and/or evaporating device for an exhaust system (5) in accordance with one of the preceding claims, wherein the flat through-flow cross section has a first width (30) in a first direction (18) extending perpendicularly to the axial direction (17) that is greater than a second width (31) in a second direction (19) extending perpendicularly to the axial direction (17) and perpendicularly to the first direction (18).

11. An exhaust system (5) for an internal combustion engine (1), in particular of a motor vehicle, comprising:
at least one SCR catalytic converter (7),
a reducing agent feed means (9), which has at least one injector (10), for feeding a reducing agent to the exhaust gas stream (11) upstream of the SCR catalytic converter (7), and
at least one mixing and/or evaporating device (12) according to one of claims 1 to 10, the mixing and/or evaporating device being arranged between the at least one injector (10) and the at least one SCR catalytic converter (7).

## Revendications

1. Dispositif de mélange et/ou d'évaporation pour une installation de gaz d'échappement (5) d'une machine à combustion interne (1), en particulier d'un véhicule automobile,
comprenant un corps de support (20), qui renferme dans la direction périphérique une section transversale, s'étendant de manière transversale par rapport à la direction axiale (17) du dispositif (12), plate, pouvant être traversée par un fluide, du dispositif (12),
dans lequel le corps de support (20) présente une première et une deuxième paroi latérale longue (21, 22) se faisant face et une première et une deuxième paroi latérale courte (23, 24) se faisant face,
dans lequel les parois latérales courtes (23, 24) relient entre elles respectivement les parois latérales longues (21, 22),
dans lequel plusieurs aubes directrices (25) sont disposées au niveau d'une des parois latérales longues (21, 22) au moins au niveau d'une extrémité axiale (26, 27), lesquelles aubes directrices font saillie en direction de la paroi latérale longue (21, 22) respectivement opposée et sont mises en place par rapport à la direction axiale (17),
**caractérisé en ce**
**qu'**une extrémité axiale (26, 27) de la première paroi latérale longue (21) est décalée d'une distance (d) dans la direction axiale (17) par rapport à l'extrémité axiale (26, 27) disposée dans la direction axiale (17) sur le même côté du dispositif (12) de la deuxième paroi latérale longue (22).

2. Dispositif de mélange et/ou d'évaporation pour une installation de gaz d'échappement (5) selon la revendication 1, dans lequel l'extrémité axiale (27) côté arrivée d'écoulement de la deuxième paroi latérale longue (22) est décalée d'une distance (d) dans la direction axiale (17), dans le sens opposé à la direction d'écoulement (33), par rapport à l'extrémité axiale (26) côté arrivée d'écoulement de la première paroi latérale longue (21).

3. Dispositif de mélange et/ou d'évaporation pour une installation de gaz d'échappement (5) selon l'une quelconque des revendications 1 à 2, dans lequel l'extrémité axiale (27) côté sortie d'écoulement de la deuxième paroi latérale longue (22) est décalée d'une distance (d) dans la direction axiale (17), dans la direction d'écoulement (33), par rapport à l'extrémité axiale (26) côté sortie d'écoulement de la première paroi latérale longue (21).

4. Dispositif de mélange et/ou d'évaporation pour une installation de gaz d'échappement (5) selon l'une quelconque des revendications précédentes, dans lequel l'extrémité axiale (27) côté sortie d'écoulement de la première paroi latérale longue (21) est décalée d'une distance (d) dans la direction axiale (17), dans la direction d'écoulement (33), par rapport à l'extrémité axiale (27) côté sortie d'écoulement de la deuxième paroi latérale longue (22).

5. Dispositif de mélange et/ou d'évaporation pour une installation de gaz d'échappement (5) selon l'une quelconque des revendications précédentes, dans lequel sont disposées, au niveau de la première et/ou de la deuxième paroi latérale longue (21, 22), au niveau d'une extrémité axiale (26, 27) côté arrivée d'écoulement, plusieurs aubes directrices (25), qui font saillie en direction de la paroi latérale longue (21, 22) respectivement opposée et sont mises en place selon un angle (α) par rapport à la direction axiale (17).

6. Dispositif de mélange et/ou d'évaporation pour une installation de gaz d'échappement (5) selon l'une quelconque des revendications précédentes, dans lequel sont disposées, au niveau de la première et/ou de la deuxième paroi latérale longue (21, 22), au niveau d'une extrémité axiale (26, 27) côté sortie d'écoulement, plusieurs aubes directrices (25), qui font saillie en direction de la paroi latérale longue (21, 22) respectivement opposée et qui sont mises en place selon un angle (α) par rapport à la direction axiale (17).

7. Dispositif de mélange et/ou d'évaporation pour une installation de gaz d'échappement (5) selon l'une quelconque des revendications précédentes, dans lequel les aubes directrices (25) sont disposées de manière transversale par rapport à la direction axiale (17), le long d'au moins une paroi latérale longue (21, 22), au niveau d'une extrémité axiale (26, 27), les unes par rapport aux autres de telle manière que les aubes directrices situées immédiatement à proximité des parois latérales courtes (23, 24) présentent, dans la direction axiale (17), une distance plus grande par rapport à l'extrémité axiale (26, 27) opposée de ladite paroi latérale longue que les aubes directrices (25) disposées de manière transversale par rapport à la direction axiale (17) respectivement davantage à distance des parois latérales courtes.

8. Dispositif de mélange et/ou d'évaporation pour une installation de gaz d'échappement (5) selon l'une quelconque des revendications précédentes, dans lequel les aubes directrices (25) sont disposées de manière transversale par rapport à la direction axiale (17), le long au moins d'une paroi latérale longue (21, 22), au niveau d'une extrémité axiale (26, 27), les unes par rapport aux autres de telle manière que les aubes directrices (25) situées immédiatement à proximité des parois latérales courtes (23, 24) présentent dans la direction axiale (17) une distance plus petite par rapport à l'extrémité axiale (26, 27) opposée de ladite paroi latérale longue (21, 22) que les aubes directrices (25) disposées de manière transversale par rapport à la direction axiale (17) respectivement davantage à distance des parois latérales courtes (23, 24).

9. Dispositif de mélange et/ou d'évaporation pour une installation de gaz d'échappement (5) selon l'une quelconque des revendications précédentes, dans lequel la distance dans la direction axiale (17) entre les aubes directrices (25) au niveau d'une extrémité axiale (26, 27) de la première paroi latérale longue (21) et l'extrémité axiale (26, 27) opposée de la première paroi latérale longue (21) est, dans le cas des aubes directrices (25) qui sont disposées plus près de la première paroi latérale courte (23), plus grande que dans le cas des aubes directrices (25) qui sont disposées plus près de la deuxième paroi latérale courte (24),
dans lequel la distance dans la direction axiale (17) entre les aubes directrices (25) au niveau d'une extrémité axiale (26, 27) de la deuxième paroi latérale longue (22) et l'extrémité axiale (26, 27) opposée de la deuxième paroi latérale longue (22) est plus courte dans le cas d'aubes directrices (25) qui sont disposées plus près de la première paroi latérale courte (23) que dans le cas d'aubes directrices (25) qui sont disposées plus près de la deuxième paroi latérale courte (24).

10. Dispositif de mélange et/ou d'évaporation pour une installation de gaz d'échappement (5) selon l'une quelconque des revendications précédentes, dans lequel la section transversale plate pouvant être traversée par un fluide présente, dans une première direction (18) s'étendant de manière perpendiculaire par rapport à la direction axiale (17), une première largeur (30) qui est plus grande qu'une deuxième largeur (31) dans une deuxième direction (19) s'étendant de manière perpendiculaire par rapport à la direction axiale (17) et de manière perpendiculaire par rapport à la première direction (18).

11. Installation de gaz d'échappement pour une machine à combustion interne (1), en particulier d'un véhicule automobile,
comprenant
au moins un catalyseur SCR (7),
au moins un dispositif d'amenée d'agent de réduction (9), qui présente au moins un injecteur (10) servant à amener un agent de réduction en direction du flux de gaz d'échappement (11) en amont du catalyseur SCR (7),
au moins une unité de mélange et/ou d'évaporation (12) selon l'une quelconque des revendications 1 à 10, qui est disposée entre l'au moins un injecteur (10) et l'au moins un catalyseur SCR (7).
